Europäisches Patentamt

(19) **European Patent Office**

Office européen des brevets

(11) Numéro de publication: **0 077 494
B1**

(12) **FASCICULE DE BREVET EUROPEEN**

(45) Date de publication du fascicule du brevet:
11.06.86

(51) Int. Cl.⁴: **B 60 R 22/00**

(21) Numéro de dépôt: **82109264.0**

(22) Date de dépôt: **07.10.82**

(54) Enrouleur de sangle de système de ceinture de sécurité.

(30) Priorité: **16.10.81 FR 8119508**

(43) Date de publication de la demande:
**27.04.83 Bulletin 83/17**

(45) Mention de la délivrance du brevet:
**11.06.86 Bulletin 86/24**

(84) Etats contractants désignés:
**DE IT SE**

(56) Documents cités:
**CH - A - 392 295
DE - A - 2 256 184
FR - A - 2 367 508
US - A - 3 074 761
US - A - 3 138 405
US - A - 3 343 765
US - A - 3 695 545**

(73) Titulaire: **N.V. KLIPPAN S.A., Research Park
Grauwmeer 1, B-3030 Heverlee-Leuven (BE)**

(72) Inventeur: **Labeur, Lucas, Broekstraat 93, Heverlee (BE)**

(74) Mandataire: **Chereau, Louis et al, Novapat-Cabinet
Chereau 107, Boulevard Péreire, F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

LIBER, STOCKHOLM 1986

## Description

La présente invention concerne les enrouleurs de sangle de système de ceinture de sécurité, notamment pour véhicules automobiles.

On connaît divers types d'enrouleurs de sangles de ceinture de sécurité qui sont généralement équipés d'au moins un dispositif de blocage de sécurité dit à "sensibilité sangle" ainsi que, le cas échéant, d'un dispositif de blocage de sécurité dit à "sensibilité véhicule". De par leur principe, les enrouleurs comprennent un ressort d'enroulement, généralement en spirale, assurant le rembobinage de la sangle, dont une extrémité intérieure est fixée sur l'arbre du tambour d'enrouleur et dont l'autre extrémité est fixée sur un boîtier monté en bout de l'arbre d'enrouleur. Ce ressort de rappel crée donc un couple antagoniste avec le couple exercé par la sangle sous tension, ce dernier variant en outre avec le nombre de spires de sangle normalement enroulé autour de l'arbre d'enrouleur en configuration d'utilisation de la ceinture de sécurité autour d'un passager de véhicule.

La présente invention a pour objet de proposer un enrouleur de sangle de ceinture de sécurité agencé de façon à effectuer une compensation effective entre le couple de rappel du ressort de rembobinage et le couple de traction de la sangle, permettant ainsi d'éliminer l'influence du ressort de rembobinage sur la sensibilité "sangle" de l'enrouleur et donc de garantir un verrouillage effectif pour une sensibilité "sangle" déterminée, généralement de l'ordre de 0,8 à 1,2 g, quelle que soit la force requise pour le ressort de rembobinage selon les divers montages envisagés pour équiper les places assises des véhicules.

Pour ce faire selon une caractéristique de l'invention, le ressort de rappel de rembobinage est monté dans une coupelle cylindrique susceptible de tourner par rapport à l'arbre du tambour d'enroulement mais rendue solidaire du châssis de l'enrouleur en un point situé sensiblement dans le plan du brin de sangle quittant l'enrouleur en configuration de port de la ceinture de sécurité.

De façon plus spécifique, l'enrouleur de sangle de ceinture de sécurité selon l'invention est du type comprenant un équipage coaxial composé d'un arbre d'enroulement, d'un ressort de rappel de rembobinage ou d'enroulement de l'arbre, et d'une roue dentée de blocage à rochet, monté sur le châssis de l'enrouleur pour pouvoir se déplacer de façon limitée, sensiblement dans la direction de la force de traction de dévidage exercée sur le brin de sangle enroulée sur l'arbre, entre une position de repos et une position décalée de blocage pour amener les dents de la roue à rochet en engagement avec au moins un organe de butée solidaire du châssis et assurer ainsi la fonction de blocage de sécurité à sensibilité "sangle" dans le cas où une traction brutale est exercée sur la sangle, notamment dans des conditions d'accident. Des enrouleurs de ce type sont déjà connus par le document britannique GB-A-1.592.713 mais présentent généralement l'inconvénient que l'équipage mobile en translation est sensible à la direction du vecteur de traction de la sangle, c'est-à-dire, que, en fonction notamment de conditions de montage, l'équipage peut se déplacer en biais si la résultante de la force de traction sur la sangle n'est pas exactement alignée avec un axe idéal de traction perpendiculaire à l'axe de rotation de l'arbre de l'enrouleur, en ne permettant pas, ainsi, d'assurer un blocage effectif et sensible pour une accélération de traction dépassant une valeur imposée assez faible. D'autre part, il s'en suit, dans les systèmes connus, une certaine incertitude concernant le trajet de déplacement de l'équipage mobile, qui oblige à prévoir un secteur denté stationnaire important destiné à coopérer avec les dents de la roue à rochet.

La présente invention a pour autre objet de proposer un enrouleur s'affranchissant de ces problèmes et permettant de rendre le rouleau d'enroulement insensible à des variations angulaires du vecteur de la résultante des forces de traction exercées sur la sangle et tendant à provoquer le dévidage de cette dernière, pour garantir ainsi un déplacement contrôlé de l'équipage mobile et un blocage effectif et précis pour toute accélération de traction dépassant l'accélération déterminée.

Pour ce faire, selon une autre caractéristique de la présente invention, l'équipage mobile susmentionné est supporté par un châssis de guidage intermédiaire lui-même monté sur le châssis support de l'enrouleur de façon à coulisser dans la direction normale de dévidage de la sangle.

La quasi-totalité des enrouleurs de sangle de ceinture de sécurité sont montés sur un châssis support servant à la fixation au châssis du véhicule et présentant une forme en U dans une configuration de gouttière renfermant la majeure partie de l'équipage tournant de l'enrouleur, l'ensemble étant le plus souvent disposé dans un boîtier.

La présente invention a pour autre objet de proposer une structure d'enrouleur simplifiée, de faibles coûts de fabrication et de poids réduit.

Pour ce faire, selon encore une autre caractéristique de l'invention, le châssis support est constitué d'un cadre sensiblement plat définissant une ouverture centrale de réception de l'équipage tournant et déplaçable en translation et comportant deux petites ailes s'étendant perpendiculairement au plan du cadre à partir des bords latéraux de l'ouverture, pour supporter en bout de façon flottante l'arbre de l'équipage tournant par l'intermédiaire du châssis de guidage.

En liaison avec ce qui précède, il est ainsi possible de réaliser l'organe de butée avec lequel viennent coopérer en engagement les dents de la roue à rochet sous la forme d'une simple arête définie par une partie d'aile estampée du cadre plat.

D'autres caractéristiques et avantages de la présente invention ressortiront de la description suivante d'un mode de réalisation donné à titre illustratif mais nullement limitatif, faite en relation avec les dessins annexés sur lesquels:

La figure 1 représente, en vue en plan, un enrouleur selon l'invention;

La figure 2 est une vue côté, partiellement en coupe, de l'enrouleur de la figure 1 pourvu de son boîtier;

La figure 3 est une vue partiellement en coupe suivant les flèches III-III de la figure 1;

La figure 4 est une vue de côté du châssis de guidage; et

La figure 5 est une vue en plan du châssis de guidage.

Comme représenté sur les figures, l'enrouleur comprend un châssis support 1 sous la forme d'un cadre sensiblement plat, définissant une ouverture centrale d'allure générale rectangulaire 2 et comprenant un prolongement inférieur dans lequel est formée une ouverture 3 servant à recevoir un boulon de fixation de l'enrouleur sur un châssis du véhicule. L'enrouleur comprend un tambour d'enroulement de sangle 4, solidaire d'un arbre d'enroulement 5 auquel sont également solidarisées une première roue à rochet 6 et une seconde roue à rochet 7 montées au voisinage des extrémités longitudinales opposées du tambour 4. Sur une partie de l'arbre 5 est montée de façon à librement tourner une coupelle cylindrique 8 renfermant le ressort de rappel de rembobinage 9, dont l'extrémité intérieure est engagée dans une fente longitudinale 10 formée dans l'arbre 5, l'extrémité extérieure du ressort 9 étant solidarisée à la paroi périphérique cylindrique de la coupelle 8. Les zones d'extrémité de l'arbre 5 tourillonnent dans des alésages 11 formés dans des moyens de palier 12 d'une structure de châssis intermédiaire de guidage 13. L'arbre 5 est maintenu en place dans les paliers 12 par des rondelles de maintien 14.

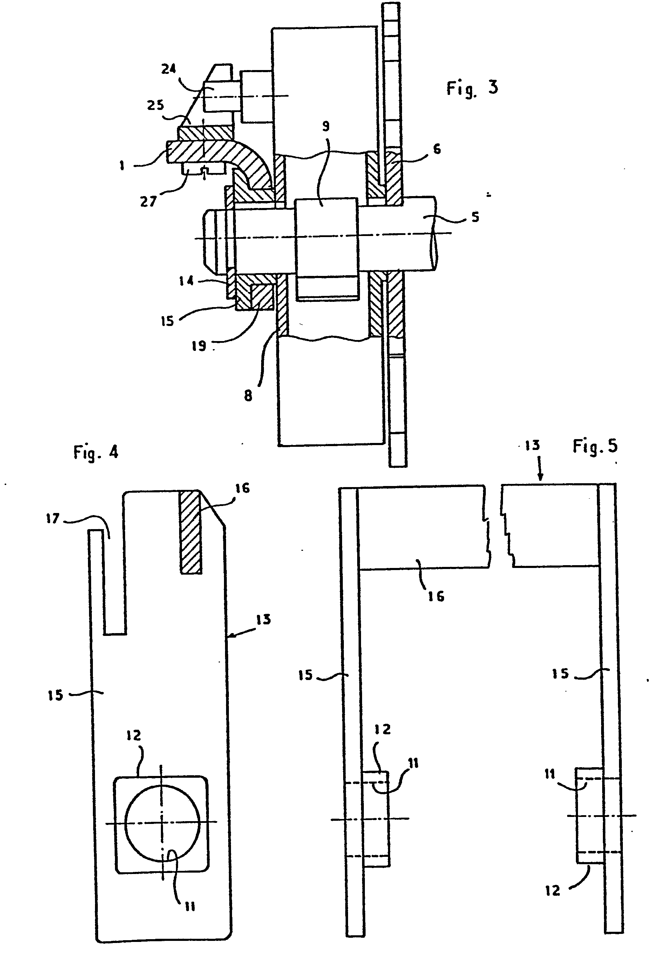

Comme on le voit sur les figures 4 et 5, le châssis intermédiaire de guidage 13 présente une configuration générale en U avec deux branches latérales 15 formant, au voisinage de leurs extrémités inférieures, les moyens de palier 12 et reliées à leur sommet par un voile transversal 16. Les branches 15 comportent chacune à leur extrémité supérieure une fente longitudinale 17 décalée par rapport au voile 16 et destinée à recevoir, en configuration de montage de l'enrouleur, la partie transversale supérieure 18 du châssis support 1 également décalée par rapport au plan principal du châssis support et parallèle à ce dernier.

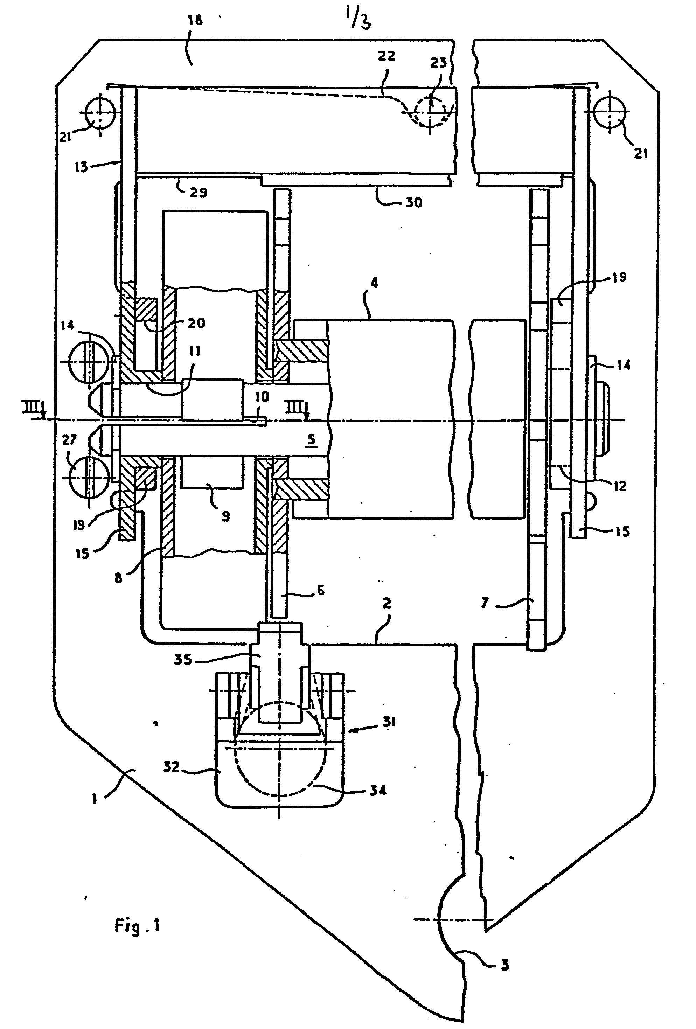

Comme on le voit sur les figures 1 à 3, le châssis support 1 en forme de cadre comprend, au niveau de la partie médiane de l'ouverture 2, deux petites ailes parallèles 19 rabattues perpendiculairement au plan principal du cadre à partir des bords latéraux de l'ouverture 2. Dans ces petites ailes sont formées des ouvertures rectangulaires alignées 20 dans lesquelles sont reçues les parties en saillie des moyens de palier 12 du châssis intermédiaire de guidage 13 qui présentent un pourtour rectangulaire ou carré de largeur coïncidant sensiblement avec la largeur des ouvertures 20 de façon à pouvoir se déplacer en étant guidées de haut en bas dans ces dernières conjointement avec l'ensemble de l'équipage contitué de l'arbre 5, du tambour d'enroulement 4, des roues à rochet 6 et 7 et de l'ensemble ressort 9/coupelle de ressort 8. Outre le guidage au moyen de la partie transversale supérieure 18 du cadre 1 dans les fentes 17, le châssis intermédiaire de guidage 13 est guidé dans son déplacement vertical de façon à ne pas pouvoir pivoter dans le plan du châssis support par des éléments 21 faisant saillie par rapport au plan du châssis support 1 et coopérant avec les bords externes des branches 15. Le châssis de guidage intermédiaire 13 est rappelé vers le bas, c'est-à-dire dans la configuration de repos de l'équipage coulissant, par un ressort calibré, qui peut être constitué d'un ressort à lame 22 prenant appui sur les extrémités supérieures des ailes 15 du châssis de guidage 13 et, centralement, une saillie 23 du châssis support 1.

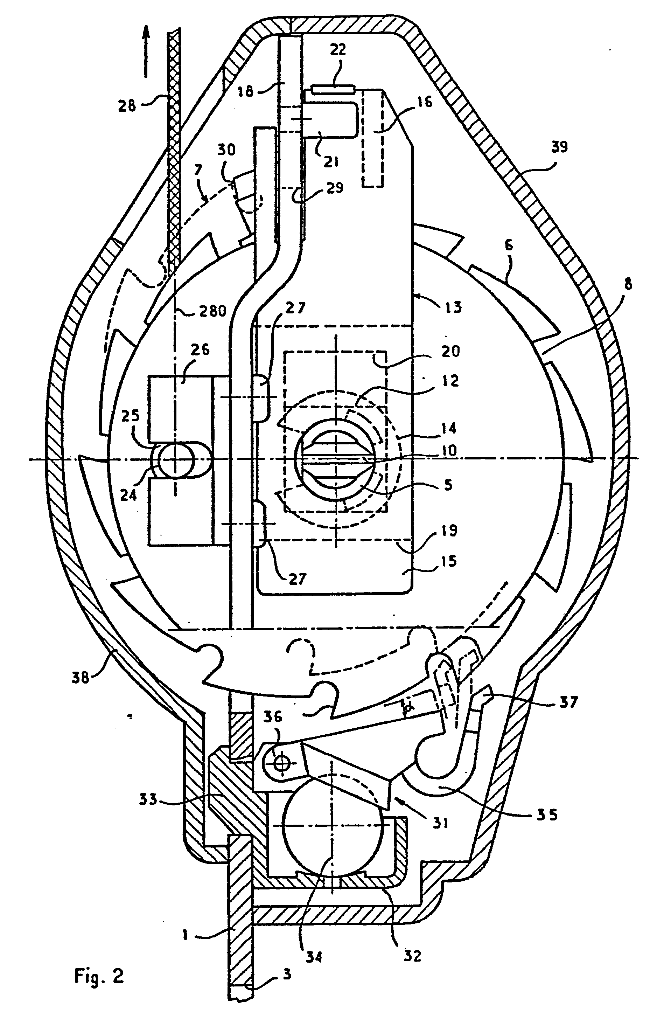

Conformément à un aspect de la présente invention, comme on le voit sur les figures 2 et 3, la coupelle de resort 8 est montée de façon à pouvoir librement tourner autour de l'extrémité de l'arbre 5, mais comprend, rapportée sur sa face plane externe, une saillie 24 destinée à être reçue dans une ouverture 25 d'une pièce ou fourchette de rétention 26 fixée au moyen de vis 27 sur la face arrière de la zone latérale du châssis support 1. Comme on le voit sur la figure 2, l'axe de la saillie 24 coïncide avec le plan 280 du brin de sangle 28 quittant l'enrouleur dans la configuration normale de port de la ceinture de sécurité pour un occupant du véhicule et correspondant donc à une longueur de sangle enroulée de l'ordre de 40 à 50 cm. Comme susmentionné, cet agercement permet d'équilibrer parfaitement le couple du ressort de rembobinage de sangle et le couple de traction sur cette sangle et de s'affranchir de l'influence de la force du ressort de rembobinage sur la sensibilité "sangle", essentiellement définie par le calibrage du ressort 22.

Comme on le voit en traits pleins sur la figure 2, dans la position de repos, les dents des roues à rochet 6 et 7 passant sans encombre, lors d'une vitesse de rotation relativement constante de l'équipage tournant, au voisinage du bord inférieur 29 de la partie transversale supérieure 18 du châssis support, dont une partie est déportée angulairement vers l'arrière pour constituer une surface de butée 30 pour les dents des roues à rochet. Lorsque l'équipage tournant est déplacé vers le haut à l'encontre de la force du ressort 22, sous l'effet d'une traction brusque exercée sur le brin de sangle 28, la face avant d'une des dents de la roue à rochet 7 vient porter contre la surface de butée 30 comme figuré en traits pointillés sur la figure 2, en empêchant ainsi tout devidage ultérieur de la sangle, pour garantir ainsi le blocage à sensibilité sangle.

L'enrouleur comprend également un dispositif de blocage inertiel 31 comprenant un boîtier support formant coupelle 32 solidaire d'une patte de montage 33 reçue dans un évidement formé dans la partie inérieure du châssis support 1. La coupelle 32 forme un siège d'appui profilé pour une bille pesante 34, coopérant avec un cliquet de blocage 35 monté articulé en une extrémité 36 sur le boîtier support 32 et terminé par un bras de blocage élastique 37 susceptible de se déplacer angulairement (comme indiqué par l'angle α) sous l'effet d'un déplacement de la bille 34 résultant d'une accélération, notamment en cas d'accident, pour venir coopérer en engagement avec les dents de la roue à rochet 6 et assurer ainsi, de façon connue, la fonction de sécurité de blocage à sensibilité véhicule. L'enrouleur peut être logé dans un boîtier constitué de deux demi-coquilles 38 et 39.

**Renvendications**

1 Enrouleur de sangle de système de ceinture de sécurité comprenant : un châssis support (1), un équipage coaxial composé d'un arbre d'enroulement (5) de sangle (28), d'un ressort d'enroulement de l'arbre (9) et d'une roue dentée à rochet (6), monté sur le châssis support (1), caractérisé en ce que le ressort d'enroulement (9) est monté dans une coupelle cylindrique (8) supportée de façon à pouvoir tourner par rapport à l'axe (5) mais rendue solidaire du châssis en une zone (24) située sensiblement dans le plan (280) du brin de sangle (28) quittant l'enrouleur.

2 Enrouleur selon la revendication 1, dans lequel l'équipage coaxial est monté sur le châssis support pour pouvoir se déplacer de façon limitée sensiblement dans la direction de la force de traction de dévidage de la sangle enroulée sur l'arbre, entre une position de repos et une position décalée de blocage où les dents de la roue à rochet viennent en engagement avec au moins un organe de butée solidaire du châssis caractérisé en ce que l'équipage (5, 8–9. 7) est supporté sur un châssis de quidage intermédiaire (13) monté sur le châssis support (1) de façon à pouvoir coulisser dans ladite direction par rapport à ce dernier.

3 Enrouleur selon la revendication 2, caractérisé en ce que les extrémités de l'axe (5) tourillonnent dans des moyens de palier (12) formés dans le châssis de guidage (13) ces paliers étant chacun reçus dans une ouverture oblonque (20) formée dans une aile latérale (19) du châssis support (1).

4 Enrouleur selon la revendication 3, caractérisé en ce qu'il comprend entre le châssis support (1) et le châssis de guidage (13), un ressort de rappel (22) sollicitant le châssis de guidage vers la position de repos de l'équipage.

5 Enrouleur selon la revendication 3 ou la revendication 4, caractérisé en ce que le châssis support (1) a la forme d'un cadre sensiblement plat comprenant une ouverture centrale (2) de réception de l'équipage (5, 8–9, 7) et deux petites ailes (19) s'étendant perpendiculairement au plan du cadre à partir des bords latéraux de l'ouverture (2).

6 Enrouleur selon la revendication 5, caractérisé en ce que l'organe de butée pour les dents de la roue à rochet (7) est formé par une partie (30) de bord intérieur (29) du cadre plat.

7 Enrouleur selon la revendication 5 ou la revendication 6, caractérisé en ce que le châssis de quidage (13) comprend des moyens de guidage et de retenue (17) coopérant avec des moyens complémentaires (18) du cadre (1).

8 Enrouleur selon l'une des revendications 5 à 7, caractérisé en ce que les moyens de palier (12) présentent, en coupe transversale, un contour périphérique rectangulaire, les ouvertures oblongues (20) des ailes (19) du châssis (1) étant également rectangulaires.

9 Enrouleur selon l'une des revendications 3 à 8, caractérisé en ce que le châssis de guidage (13) a une configuration générale en U avec deux branches parallèles (15) formant les moyens de palier (12) de l'axe (5).

10 Enrouleur selon l'une des revendications précédentes, caractérisé en ce qu'il comprend en outre un dispositif de blocage à inertie (31).

**Patentansprüche**

1. Sicherheitsgurtsystem-Gurtaufwickler mit einem Trägergestell (1), einer koaxialen Einrichtung mit einer Aufwickelachse (5) für einen Gurt (28), einer Aufwickelfeder der Achse (9) und einem gezahnten Sperrad (6), das auf dem Trägergestell (1) befestigt ist, dadurch gekennzeichnet, daß die Aufwickelfeder (9) in einer zylindrischen Kapsel (8) derart angebracht ist, daß sie sich in Bezug auf die Achse (5) drehen kann, aber in einer Zone (24), die im wesentlichen in der Ebene (280) des Fadens des den Aufwickler verlassenden Gurtes (28) liegt, mit dem Gestell formschlüssig ist.

2. Aufwickler nach Anspruch 1, in welchem die koaxiale Einrichtung auf dem Trägergestell derart angebracht ist, daß sie im wesentlichen in der Richtung der Zugkraft beim Abwickeln des auf der Achse aufgewickelten Gurtes in begrenzter Weise zwischen einer Ruhestellung und einer ihr gegenüber verlagerten Blockierstellung, wo die zähne des Sperrades in Eingriff mit wenigstens einem mit dem Gestell formschlüssigen Widerlagerorgan kommen, verschoben werden kann, dadurch gekennzeichnet, daß die Einrichtung (5, 8–9, 7) auf einem Zwichenführungsgestell (13) gelagert ist, welches auf dem Trägergestell (1) derart angebracht ist, daß es in dieser Richtung in Bezug auf das letztere gleiten kann.

3. Aufwickler nach Anspruch 2, dadurch gekennzeichnet, daß die Enden der Achse (5) in Lagereinrichtungen (12) rotieren, die in dem Führungsgestell (13) ausgebildet sind, wobei diese Lager jeweils von einer länglichen Öffnung (20) aufgenommen sind, die in einem seitlichen Flügel (19) des Trägergestells (1) ausgebildet ist.

4. Aufwickler nach Anspruch 3, dadurch gekennzeichnet, daß er zwischen dem Trägergestell (1) und dem Führungsgestell (13) eine Rückholfedei (22) aufweist, die das Führungsgestell in die Ruhestellung der Einrichtung drückt.

5.Aufwickler nach Anspruch 3 oder Anspruch 4, dadurch gekennzeichnet, daß das Trägergestell (1) die Form eines im wesentlichen flachen Rahmens hat, der eine mittige Öffnung (2) zur Aufnahme der Einrichtung (5, 8–9, 7) und zwei kleine Flügel (19) aufweist, die sich von den seitlichen Rändern der Öffnung (2) aus senkrecht zur Ebene des Rahmens erstrecken.

6. Aufwickler nach Anspruch 5, dadurch gekennzeichnet, daß das Widerlagerorgan für die Zähne des Sperrades (7) von einem Teil (30) des Innenrandes (29) des flachen Rahmens gebildet ist.

7. Aufwickler nach Anspruch 5 oder Anspruch 6, dadurch gekennzeichnet, daß das Führungsgestell (13) Führungs- und Rückhaltemittel (17) aufweist, die mit komplementären Mitteln (18) des Rahmens (1) zusammenwirken.

8. Aufwickler nach einem der Ansprüche 5 bis 7, dadurch gekennzeichnet, daß die Lagermittel (12) im Querschnitt einen rechteckigen Umriß aufweisen, wobei die länglichen Öffnungen (20) der Flügel (19) des Gestells (1) auch rechteckig sind.

9. Aufwickler nach einem der Ansprüche 3 bis 8, dadurch gekennzeichnet, daß das Führungsgestell (13) eine allgemein U-förmige Gestalt mit zwei parallelen Armen (15), die die Lagermittel (12) der Achse (5) bilden, hat.

10 Aufwickler nach einem der vorausgehenden Ansprüche, dadurch gekennzeichnet, daß er außerdem eine Trägheitsblockiereinrichtung (31) aufweist.

## Claims

1. A retractor for use with a safety belt system including : a support frame (1), a coaxial assembly including a shaft (5) for winding a belt (28), a spring (9) for the winding shaft, and a ratchet toothed wheel (6), mounted on said support frame, wherein winding spring (9) is disposed inside a cylindrical cup (8) rotatably supported with reference to shaft (5) but made integral with said frame at a region (24) substantially in the plane (280) of the belt (28) run leaving the retractor.

2. The retractor of claim 1, in which said coaxial assembly is mounted on the support frame in order to be able to move in a restricted manner substantially in the same direction as the unwinding traction force exerted by the belt wound around the shaft, between a rest position and a locking shifted position where the ratchet wheel teeth are engaging at least a stop member integral with the frame, wherein said assembly (5, 8–9, 7) is supported on an intermediate guiding frame (13) mounted on the support frame (1) so as to be able to slide in said direction with reference to the latter.

3. The retractor of claim 2, wherein the shaft (5) ends are journaled in bearing means (12) provided in the guiding frame (13), said bearings being each received in an oblong opening (20) in an side wing (19) of the support frame (1).

4. The retractor of claim 3, including between the support frame (1) and the quiding frame (13), a return spring (22) biasing said quiding frame towards the rest position of the assembly.

5. The retractor of claim 3 or claim 4, wherein said support frame (1) is similar to a substantially flat frame including a central opening (2) for receiving said assembly (5, 8–9, 7) and two small wings (19) extending with right angles with respect to said frame from the side edges of the opening (2).

6. The retractor of claim 5, whereine said stop member for the ratchet wheel (7) teeth is formed of a portion (30) of the internal edge (29) of said flat frame.

7. The retractor of claim 5 or claim 6, wherein said guiding frame (13) includes quiding and maintaining means (17) cooperating with complementary means (18) of said frame (1).

8. The retractor of claims 5–7, wherein said bearing means (12) include, in a transverse section, a rectangular peripheric contour, the wing (19) oblong openings (20) of said frame (1) having also a rectangular shape.

9. The retractor of claims 3–8, wherein said quiding frame (13) has a generally U-shape with two parallel legs (15) providing said shaft (5) bearing means (12).

10. The retractor of any preceding claims, further including an inertial locking device (31).

Fig. 1

Fig. 2

Fig. 3

Fig. 4

Fig. 5